# EUROPEAN PATENT SPECIFICATION

(11) **EP 4 403 355 B1**
(45) Date of publication and mention of the grant of the patent: **28.10.2026**
(21) Application number: 24150231.9
(22) Date of filing: 03.01.2024
(51) Int. Cl.: B32B 17/10, B60Q 3/208, B60Q 3/64, F21V 8/00, B60J 7/043

(54) **VEHICLE ROOF ASSEMBLY COMPRISING A PATTERNED TRANSPARENT PANEL AND METHOD OF PROVIDING A PATTERN ON A TRANSPARENT ELEMENT**
FAHRZEUGDACHANORDNUNG MIT EINER GEMUSTERTEN TRANSPARENTEN PLATTE UND VERFAHREN ZUR BEREITSTELLUNG EINES MUSTERS AUF EINEM TRANSPARENTEN ELEMENT
ENSEMBLE TOIT DE VÉHICULE COMPRENANT UN PANNEAU TRANSPARENT À MOTIFS ET PROCÉDÉ DE FOURNITURE D'UN MOTIF SUR UN ÉLÉMENT TRANSPARENT

(30) Priority: 20.01.2023 EP 23152661
(43) Date of publication of application: 24.07.2024
(73) Proprietor: Inalfa Roof Systems Group B.V., 5807 GW Oostrum (NL)
(72) Inventor: Geurts, Stephan Paulus Jan, 5951 BS BELFELD (NL)
(74) Representative: De Vries & Metman

(56) References cited:
- WO-A1-2007/077099
- WO-A1-2014/167291
- WO-A1-2020/201973
- DE-A1- 102018 208 740

## Description

The invention relates to a roof assembly for covering an opening in a vehicle roof, the roof assembly comprising a lighting assembly, wherein the lighting assembly comprises a pattern on a transparent panel. Further, the invention relates to a corresponding method of providing a pattern on a transparent element.

A vehicle roof assembly for a vehicle roof is well-known. For example, an open-roof assembly is configured to be mounted in a vehicle roof and comprises at least one moveably arranged closure member. The closure member is configured and arranged to cover an opening in the vehicle roof or at least partly uncover the opening in the vehicle roof. Usually, but not necessarily, the closure member is a transparent panel and comprises glass or a suitable plastics. The closure member may be configured to tilt or to slide. Another example is a fixed, usually transparent panel in the vehicle roof of a passenger compartment to enable a sky view through the roof of the vehicle, for example, for any occupants in the passenger compartment.

In either of the above-mentioned vehicle roof assemblies or any other kind of vehicle roof assembly, a lighting assembly may be provided. Such a lighting assembly may comprise light emitting diodes, commonly known as LED's, or another suitable light source. The light source may illuminate an interior compartment of the vehicle indirectly. For example, light from the light source may be coupled into a transparent pane and coupled out of the pane by a suitable structure of a surface of the pane or by suitable elements arranged on the surface of the pane. Such a pane may be a part of a laminated stack of layers, including one or more panes and other layers, as known in the art by for instance WO2020201973A1.

Preferably, when the lighting assembly is switched off, the structuring of the surface or the elements on the surface are not noticeable for the occupants of the vehicle, when looking outward during daytime. Thereto, it is known to provide a semitransparent pattern of only small pattern parts, for example. In particular, the pattern parts may be comprised of very small dots. As described e.g. in EP3702217A1, wherein dots have a dot surface area with a representative diameter of 80 microns or less. Or, in a particular example, the representative diameter may be larger than 80 microns and in such examples, the dots may be individually distinguishable, depending on the normal viewing distance which varies between vehicle types. Still, if the representative diameter of the dots remains smaller than about 150 microns, the dots remain invisible when the viewer focuses on the exterior viewings. Or in other examples, the representative diameter of the dots is within a range from about 50 microns to about 70 microns. Such dots are easily and costeffectively manufacturable by screen printing. In another example, the representative diameter is within a range from about 20 microns to about 50 microns. Dots with a size in this range may be provided by inkjet printing, for example. Due to their very small size, such dots are even more difficult to detect with the human eye. However, for each of these examples, if a pattern part has a low density, which is formed by providing a number of very small dots, wherein a surface area covered by the dots is less than half of a surface area of the pattern part, an edge of such a pattern part may appear frayed or jagged when the lighting assembly is switched on.

It is an object of the present invention to provide a pattern comprising a low-density pattern part, of which the edge does not appear frayed or jagged.

In a first aspect, the object is achieved in a vehicle roof assembly according to claim 1. The roof assembly comprises a transparent panel and a lighting assembly. The lighting assembly comprises an illumination pattern arranged on the transparent panel. The illumination pattern comprises at least one low-density pattern element. The low-density pattern element comprises a light-scattering area and multiple transparent areas enclosed within the light-scattering area. A surface area of the light-scattering area of the low-density pattern element is smaller than a sum of a surface area of each of the enclosed transparent areas. An edge of the low-density pattern element is formed between the light-scattering area and a surrounding area, the surrounding area being adjacent to the low-density pattern element. The enclosed transparent areas each have a surface area with a representative diameter of 150 microns or less.

Instead of forming the low-density pattern element by arranging a number of light-scattering dots within an area of the low-density pattern element, the area of the low-density pattern element is light-scattering with the exception of the transparent areas within the area of the low-density pattern element. As a result, an edge of the low-density pattern element is formed as a continuous edge of the light-scattering area, while a ratio of the surface area of the light-scattering area and the sum of the surface area of the transparent areas remains.

The edge of the low-density pattern element is formed between the light-scattering area and a surrounding area, the surrounding area being adjacent to the low-density pattern element. Hence, a circumferential edge of the low-density element is formed by the light-scattering area in contrast to the prior art where a formation of dots should merely give an impression of an edge of the low-density element.

The multiple transparent areas enclosed within the light-scattering area have a surface area with a representative diameter of 150 microns or less, or preferably 120 microns or less, or even 80 microns or less. In other embodiments, the representative diameter of the multiple transparent areas is within a range from about 50 microns to about 70 microns. In another example, the representative diameter is within a range from about 20 microns to about 50 microns.

In an embodiment of the roof assembly, the light-scattering area comprises a light-scattering composition. For example, a paint or an ink may be used as a light-scattering composition, applied on the transparent panel such to form the light-scattering area. In particular, the light-scattering composition may comprise a transparent carrier composition, in which a minor amount of light scattering particles may be arranged, for example as described in co-pending European patent application with application number EP21193114 (not yet published).

In an embodiment of the roof assembly, the light-scattering area of the transparent element comprises a surface texture different than the transparent area. By changing a surface texture of the transparent panel, light may be scattered as well.

In an embodiment of the roof assembly, the transparent panel comprises a glass pane, the glass pane comprising a first main surface and a second main surface opposite the first main surface and four edge surfaces extending between the first main surface and the second main surface, wherein a light source is arranged adjacent to one of the edge surfaces for injecting light into the glass pane in a direction substantially parallel to the first and the second main surface and wherein the illumination pattern is provided on one of the first and the second main surface for scattering the injected light through one of the first and the second main surface.

In an embodiment of the roof assembly, the roof assembly is an open-roof assembly, the transparent panel being moveably arranged as a closure member of the open-roof assembly for covering or at least partly uncovering the opening in the vehicle roof.

In an aspect, a vehicle is provided, wherein the vehicle comprises the roof assembly according to one of the above-described embodiments of the roof assembly.

In an aspect, a method of providing an illumination pattern on a transparent element is provided. The method comprises designing the illumination pattern. The illumination pattern comprises at least one low-density pattern element, wherein the low-density pattern element comprises a light-scattering area and transparent areas enclosed within the light-scattering area. A surface area of the light-scattering area of the low-density pattern element is smaller than a sum of a surface area of each of the enclosed transparent areas. An edge of the low-density pattern element is formed between the light-scattering area and a surrounding area, the surrounding area being adjacent to the low-density pattern element. The enclosed transparent areas each have a surface area with a representative diameter of 150 microns or less. The method further comprises designing an inverse pattern, wherein the inverse pattern is complementary to the illumination pattern. The inverse pattern comprises inverse pattern elements corresponding to the transparent areas enclosed in the light-scattering area of the low-density pattern element. The method further comprises providing the inverse pattern on a surface of the transparent element, providing the illumination pattern on the transparent surface and removing the inverse pattern from the transparent element such that an area that was covered by the inverse pattern is transparent.

In an embodiment of the method, the transparent element is a transparent panel. The transparent panel may be any transparent planar element used for providing the roof assembly. For example, in a particular embodiment, the transparent element may be a transparent foil, the transparent foil being configured to be applied on a rigid transparent panel.

In an embodiment, the inverse pattern is formed by a meltable composition and the method further comprises heating the meltable composition to melt the meltable composition for removing the inverse pattern.

In an embodiment of the method, the method further comprises performing an operation on the surface of the transparent element using the inverse pattern as a mask. For example, in a particular embodiment, the operation comprises applying a light-scattering composition, which may then be cured. In another exemplary embodiment, the operation comprises altering a surface texture of the transparent element. Thus, a surface texture of the transparent element may be changed to provide a light-scattering area.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description with reference to the appended schematical drawings, in which:
- Fig. 1: shows a perspective view of a vehicle roof with an open roof assembly;
- Fig. 2: shows a cross-section of an embodiment of a multi-layered transparent panel for use in a vehicle roof assembly;
- Fig. 3A - 3C: each show a part of a line element having a mean grey level of about 30%; and
- Fig. 4A - 4D: illustrate method steps of a method for providing an illumination pattern on a transparent element.

The present invention will now be described with reference to the accompanying drawings, wherein the same reference numerals have been used to identify the same or similar elements throughout the several views.

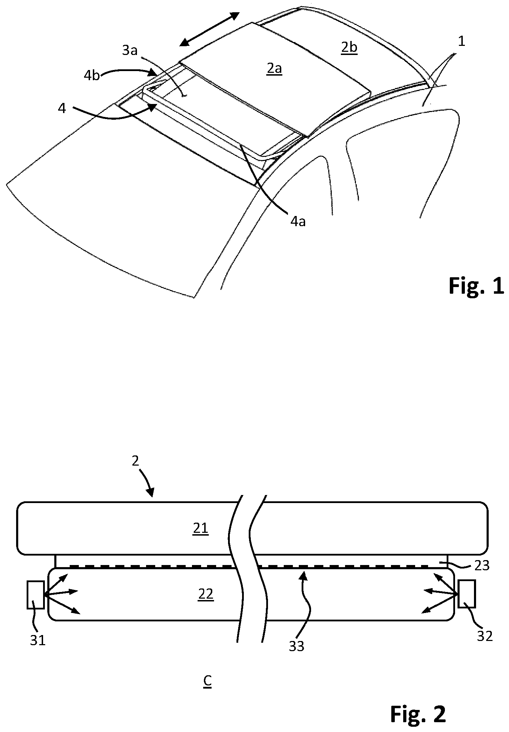

Fig. 1 illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Further, the present invention is not limited to an embodiment comprising a moveably arranged closure member. In another embodiment, the roof assembly may comprise a fixed transparent panel arranged over the first roof opening 3a, similar to the fixed panel 2b being arranged over the second roof opening 3b. In such embodiment, instead of two separate panels 2a, 2b, a single panel may be employed, as well known in the art.

Fig. 2 shows an embodiment of the above-mentioned vehicle roof assembly, in which a transparent panel 2 may be employed. For example, the closure member 2a, the fixed panel 2b or both may comprise such a transparent panel 2.

In the illustrated embodiment, the transparent panel 2 comprises an exterior pane 21 and an interior pane 22. Each pane 21, 22 comprises a first and a second main surface and four circumferential edge surfaces. The exterior and interior panes 21, 22 are adhered to each other at one of their respective first and second main surfaces by a polymer layer 23, which may be a PVB layer or an EVA layer, for example, as well known in the art. The exterior pane 21 and the interior pane 22 may be formed of any suitable transparent material including but not limited to glass or plastics. The material composition of the exterior pane 21 and the interior pane 22 may be identical or may be different.

The transparent panel 2 comprises a lighting assembly. The lighting assembly comprises a first LED strip 31 and a second LED strip 32. Each of the LED strips 31, 32 are arranged and configured to emit light into the interior pane 22 at a circumferential edge surface thereof. The light is guided through the interior pane 22 acting as a light guide. A pattern of scattering structures 33 is provided at a boundary between one of the main surfaces of the interior pane 22 and the polymer layer 23. When the light propagating through the interior pane 22 impinges on one of the scattering structures 33, the light is scattered and as a result at least a part of the scattered light will leave the interior pane 22 in a direction of an interior compartment C, thereby illuminating the interior compartment C.

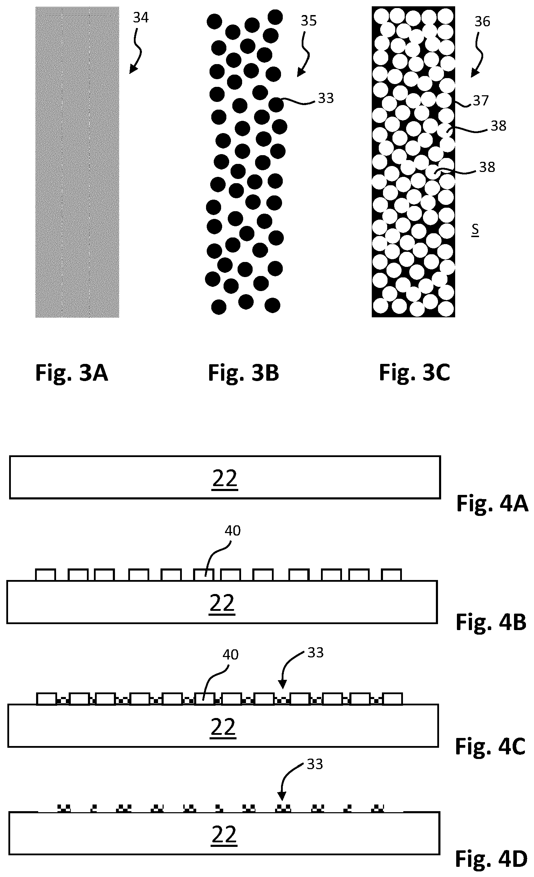

For providing an illumination pattern, a number of pattern elements may be formed by arranging a number of scattering structures 33. On the other hand, a surface area covered by the light scattering structures 33 is preferred to be relatively low such that light passing through the transparent panel 2 is not visually disturbed, e.g. during daytime, such that an occupant in the interior compartment C of the vehicle experiences an undisturbed view to the surroundings. Therefore, a pattern element may be formed with a low density, i.e. a surface area of the light-scattering structures of such a low-density pattern element is smaller than half of a surface area of the pattern element as a whole. In other words, a surface area of the light-scattering structures of such a low-density pattern element is smaller than a sum of a surface area of the transparent areas. Figs. 3A - 3C each illustrate an embodiment of a low-density pattern element 34, 35 and 36, respectively.

A first low-density pattern element 34 as shown in Fig. 3A has a uniform density of about 33%, represented as a 33% grey value. Such a uniform density is hard to provide in practice. Therefore, in prior art, a low density pattern element is generated by providing a number of dots of light scattering structures 33, as shown in Fig. 3B as black dots forming a second pattern element 35. A total surface area of the scattering structures 33 is about 33% of a total surface area of the low-density pattern element 35. If a size of each scattering structure 33 is small enough, the human visual system will not be able to distinguish each individual scattering structure 33. As a result, a viewer will experience an uniform low-density pattern element.

The second low-density pattern element 35, however, may not appear as a straight line segment as the first pattern element 34 of Fig. 3A. Due to the positioning of the scattering structures 33, a frayed or jagged line may be experienced by a viewer, as also apparent when viewing the line segment 35 of Fig. 3B. In order to prevent such frayed or jagged appearance, in a third pattern element 36 as shown in Fig. 3C, a main surface area of the pattern element is formed by the light scattering structure. To reduce the density, a number of transparent areas are arranged within such main surface area. Referring to Fig. 3C in more detail, a black area 37 is formed by a light scattering surface or composition, while a number of white areas 38 are not light-scattering and are thus transparent. As a result, a boundary between the third pattern element 36 and its adjacent surrounding area S appears as a straight edge, similar to the straight edge of the first low-density pattern element 34 (Fig. 3A).

Figs. 4A - 4D illustrate a method of providing an illumination pattern on a transparent element 22. In a first step as illustrated in Fig. 4A, a transparent element 22 is provided. The transparent panel 22 may be a rigid panel, like a glass pane or the like, that may be used as the exterior pane 21 or the interior pane of the transparent panel 2 (see Fig. 2). In another embodiment, the transparent element 22 may be a flexible element, like a polymer foil or the like, that may be used as the polymer layer 23 (see Fig. 2).

Based on a designed illumination pattern comprising at least one low-density pattern element, an inverse pattern is designed. The inverse design pattern comprises the transparent areas (cf. white areas 38 and the surroundings S in Fig. 3C). Thus, as is apparent from Fig. 3C, such an inverse pattern is complementary to the designed illumination pattern. In a second step as illustrated in Fig. 4B, the inverse pattern is provided on a surface of the transparent element 22 by providing inverse pattern structures 40 on such surface. The inverse pattern structures 40 may be provided by any suitable method such that the provided inverse pattern may be later removed without leaving any residue or remaining parts. For example, a heatmeltable or a soluble composition may be used to provide the inverse pattern structures 40 by screen printing or inkjet printing.

In a third step as illustrated in Fig. 4C, the inverse pattern structures 40 are used as a mask. Where the surface of the transparent element 22 is not covered by inverse pattern structures 40, the surface is treated. For example, a light scattering composition may be applied in the voids between the inverse pattern structures 40 or a texture of the surface of the transparent element 22 may be changed by blasting or etching or the like such to form the light-scattering structures 33 at the location of the voids between the inverse pattern structures 40.

Then, in a fourth step as illustrated in Fig. 4D, the inverse pattern structures 40 are removed, e.g. by application of heat to melt the composition of the inverse pattern structures 40 or by application of a solvent to dissolve the composition of the inverse pattern structures 40, as above described as exemplary embodiments.

The transparent element 22 resulting after the fourth step may be ready to be used as a closure member of a roof assembly. In another embodiment, the transparent element 22 may be treated further. For example, it may be combined with further transparent elements to form the multi-layered transparent panel 2 as shown in Fig. 2.

## Claims

1. A roof assembly for covering an opening (3a, 3b) in a vehicle roof (1), the roof assembly comprising a transparent panel (2) and a lighting assembly (31, 32), the lighting assembly (31, 32) comprising an illumination pattern arranged on the transparent panel (2),
wherein the illumination pattern comprises at least one low-density pattern element (36), the low-density pattern element (36) comprising a light-scattering area (37) and transparent areas (38) enclosed within the light-scattering area (37),
wherein a surface area of the light-scattering area (37) of the low-density pattern element (36) is smaller than a sum of a surface area of the enclosed transparent areas (38),
wherein an edge of the low-density pattern element (36) is formed between the light-scattering area (37) and a surrounding area (S), the surrounding area (S) being adjacent to the low-density pattern element (36),
**characterized in that** the enclosed transparent areas (38) each have a surface area with a representative diameter of 150 microns or less.

2. The roof assembly according to claim 1, wherein the light-scattering area (37) comprises a light-scattering composition.

3. The roof assembly according to claim 1, wherein the light-scattering area (37) of the transparent element (22) comprises a surface texture different than the transparent area (38).

4. The roof assembly according to claim 1, wherein the transparent panel (2) comprises a glass pane (22), the glass pane (22) comprising a first main surface and a second main surface opposite the first main surface and four edge surfaces extending between the first main surface and the second main surface,
wherein a light source (31, 32) is arranged adjacent to one of the edge surfaces for injecting light into the glass pane (22) in a direction substantially parallel to the first and the second main surface, and
wherein the illumination pattern is provided on one of the first and the second main surface for scattering the injected light through one of the first and the second main surface.

5. The roof assembly according to claim 1, wherein the roof assembly is an open-roof assembly, the transparent panel (2) being moveably arranged as a closure member of the open-roof assembly for covering or at least partly uncovering the opening (3a) in the vehicle roof.

6. A method of providing an illumination pattern on a transparent element (22), the method comprising
a) designing the illumination pattern, the illumination pattern comprising at least one low-density pattern element (36), the low-density pattern element (36) comprising a light-scattering area (37) and transparent areas (38) enclosed within the light-scattering area (37), wherein a surface area of the light-scattering area (37) of the low-density pattern element (36) is smaller than a sum of a surface area of the enclosed transparent areas (38), wherein an edge of the low-density pattern element (36) is formed between the light-scattering area (37) and a surrounding area (S), the surrounding area (S) being adjacent to the low-density pattern element (36), and wherein the enclosed transparent areas (38) each have a surface area with a representative diameter of 150 microns or less;
b) designing an inverse pattern (40), wherein the inverse pattern (40) is complementary to the illumination pattern, the inverse pattern (40) comprising inverse pattern elements corresponding to the transparent areas (38) enclosed in the light-scattering area (37) of the low-density pattern element (36) ;
c) providing the inverse pattern (40) on a surface of the transparent element (22);
d) providing the illumination pattern on the transparent surface;
e) removing the inverse pattern (40) from the transparent element (22) such that an area that was covered by the inverse pattern in step c) is transparent.

7. The method according to claim 6, wherein the transparent element (22) is a transparent panel (2).

8. The method according to claim 6, wherein the transparent element (22) is a transparent foil, the transparent foil being configured to be applied on a transparent panel (2).

9. The method according to claim 6, wherein the inverse pattern (40) is formed by a meltable composition and wherein step e) comprises heating the meltable composition to melt the meltable composition.

10. The method according to claim 6, wherein step d) comprises performing an operation on the surface of the transparent element (22) using the inverse pattern (40) as a mask.

11. The method according to claim 10, wherein the operation comprises applying a light-scattering composition.

12. The method according to claim 10, wherein the operation comprises altering a surface texture of the transparent element (22).

13. A vehicle comprising the roof assembly according to one of the claims 1 - 5.

## Patentansprüche

1. Dachbaugruppe zum Abdecken einer Öffnung (3a, 3b) in einem Fahrzeugdach (1), wobei die Dachbaugruppe eine transparente Platte (2) und eine Beleuchtungsbaugruppe (31, 32) aufweist, wobei die Beleuchtungsbaugruppe (31, 32) ein Beleuchtungsmuster aufweist, das auf der transparenten Platte (2) angeordnet ist,
wobei das Beleuchtungsmuster mindestens ein niedrige-Dichte-Musterelement (36) aufweist, wobei das niedrige-Dichte-Musterelement (36) einen Lichtstreubereich (37) und transparente Bereiche (38) aufweist, die innerhalb des Lichtstreubereichs (37) eingeschlossen sind,
wobei ein Flächenbereich des Lichtstreubereichs (37) des niedrige-Dichte-Musterelements (36) kleiner ist als eine Summe eines Flächenbereichs der eingeschlossenen transparenten Bereiche (38),
wobei ein Rand des niedrige-Dichte-Musterelements (36) zwischen dem Lichtstreubereich (37) und einem umgebenden Bereich (S) ausgebildet ist, wobei der umgebende Bereich (S) zu dem niedrige-Dichte-Musterelement (36) benachbart ist,
**dadurch gekennzeichnet, dass** die eingeschlossenen transparenten Bereiche (38) jeweils einen Flächenbereich mit einem repräsentativen Durchmesser von 150 Mikrometern oder weniger haben.

2. Dachbaugruppe gemäß Anspruch 1, wobei der Lichtstreubereich (37) eine lichtstreuende Zusammensetzung aufweist.

3. Dachbaugruppe gemäß Anspruch 1, wobei der Lichtstreubereich (37) des transparenten Elements (22) eine Oberflächentextur aufweist, die sich von der des transparenten Bereichs (38) unterscheidet.

4. Dachbaugruppe gemäß Anspruch 1, wobei die transparente Platte (2) eine Glasscheibe (22) aufweist, wobei die Glasscheibe (22) eine erste Hauptfläche und eine zweite Hauptfläche, die der ersten Hauptfläche gegenüberliegt, und vier Randflächen aufweist, die sich zwischen der ersten Hauptfläche und der zweiten Hauptfläche erstrecken,
wobei eine Lichtquelle (31, 32) benachbart zu einer der Randflächen angeordnet ist zum Injizieren von Licht in die Glasscheibe (22) in einer Richtung im Wesentlichen parallel zu der ersten und der zweiten Hauptfläche, und
wobei das Beleuchtungsmuster auf einer von der ersten und der zweiten Hauptfläche vorgesehen ist, um das injizierte Licht durch eine von der ersten und der zweiten Hauptfläche zu streuen.

5. Dachbaugruppe gemäß Anspruch 1, wobei die Dachbaugruppe eine Offendachgruppe ist, wobei die transparente Platte (2) bewegbar angeordnet ist als ein Verschlusselement der Offendachgruppe zum Abdecken oder zumindest teilweisen Freilegen der Öffnung (3a) in dem Fahrzeugdach.

6. Verfahren zum Bereitstellen eines Beleuchtungsmusters auf einem transparenten Element (22), wobei das Verfahren aufweist
a) Entwerfen des Beleuchtungsmusters, wobei das Beleuchtungsmuster mindestens ein niedrige-Dichte-Musterelement (36) aufweist, wobei das niedrige-Dichte-Musterelement (36) einen Lichtstreubereich (37) und transparente Bereiche (38) aufweist, die innerhalb des Lichtstreubereichs (37) eingeschlossen sind, wobei ein Flächenbereich des Lichtstreubereichs (37) des niedrige-Dichte-Musterelements (36) kleiner ist als eine Summe eines Flächenbereichs der eingeschlossenen transparenten Bereiche (38), wobei ein Rand des niedrige-Dichte-Musterelements (36) zwischen dem Lichtstreubereich (37) und einem umgebenden Bereich (S) ausgebildet ist, wobei der umgebende Bereich (S) zu dem niedrige-Dichte-Musterelement (36) benachbart ist, und wobei die eingeschlossenen transparenten Bereiche (38) jeweils einen Flächenbereich mit einem repräsentativen Durchmesser von 150 Mikrometern oder weniger haben,
b) Entwerfen eines inversen Musters (40), wobei das inverse Muster (40) komplementär zu dem Beleuchtungsmuster ist, wobei das inverse Muster (40) inverse Musterelemente aufweist, die zu den transparenten Bereichen (38) korrespondieren, die in dem Lichtstreubereich (37) des niedrige-Dichte-Musterelements (36) eingeschlossen sind,
c) Bereitstellen des inversen Musters (40) auf einer Fläche des transparenten Elements (22),
d) Bereitstellen des Beleuchtungsmusters auf der transparenten Fläche,
e) Entfernen des inversen Musters (40) von dem transparenten Element (22), sodass ein Bereich, der durch das inverse Muster in Schritt c) abgedeckt wurde, transparent ist.

7. Verfahren gemäß Anspruch 6, wobei das transparente Element (22) eine transparente Platte (2) ist.

8. Verfahren gemäß Anspruch 6, wobei das transparente Element (22) eine transparente Folie ist, wobei die transparente Folie konfiguriert ist, um auf eine transparente Platte (2) aufgebracht zu werden.

9. Verfahren gemäß Anspruch 6, wobei das inverse Muster (40) durch eine schmelzbare Zusammensetzung gebildet wird und wobei Schritt e) aufweist Erwärmen der schmelzbaren Zusammensetzung, um die schmelzbare Zusammensetzung zu schmelzen.

10. Verfahren gemäß Anspruch 6, wobei Schritt d) aufweist Durchführen eines Vorgangs auf der Fläche des transparenten Elements (22) unter Verwendung des inversen Musters (40) als eine Maske.

11. Verfahren gemäß Anspruch 10, wobei der Vorgang aufweist Aufbringen einer lichtstreuenden Zusammensetzung.

12. Verfahren gemäß Anspruch 10, wobei der Vorgang aufweist Ändern einer Oberflächentextur des transparenten Elements (22).

13. Fahrzeug, das die Dachbaugruppe nach einem der Ansprüche 1-5 aufweist.

## Revendications

1. Ensemble toit pour recouvrir une ouverture (3a, 3b) dans un toit de véhicule (1), l'ensemble toit comprenant un panneau transparent (2) et un ensemble éclairage (31, 32), l'ensemble éclairage (31, 32) comprenant un motif d'illumination agencé sur le panneau transparent (2),
dans lequel le motif d'illumination comprend au moins un élément de motif de basse densité (36), l'élément de motif de basse densité (36) comprenant une zone de diffusion de lumière (37) et des zones transparentes (38) enfermées au sein de la zone de diffusion de lumière (37),
dans lequel une superficie de la zone de diffusion de lumière (37) de l'élément de motif de basse densité (36) est plus petite qu'une somme d'une superficie des zones transparentes (38) enfermées,
dans lequel un bord de l'élément de motif de basse densité (36) est formé entre la zone de diffusion de lumière (37) et une zone environnante (S), la zone environnante (S) étant adjacente à l'élément de motif de basse densité (36), **caractérisé en ce que** les zones transparentes (38) enfermées présentent chacune une superficie avec un diamètre représentatif de 150 microns ou moins.

2. Ensemble toit selon la revendication 1, dans lequel la zone de diffusion de lumière (37) comprend une composition de diffusion de lumière.

3. Ensemble toit selon la revendication 1, dans lequel la zone de diffusion de lumière (37) de l'élément transparent (22) comprend une texture de surface différente de la zone transparente (38).

4. Ensemble toit selon la revendication 1, dans lequel le panneau transparent (2) comprend une vitre (22), la vitre (22) comprenant une première surface principale et une seconde surface principale opposée à la première surface principale et quatre surfaces de bord s'étendant entre la première surface principale et la seconde surface principale,
dans lequel une source lumineuse (31, 32) est agencée adjacente à l'une des surfaces de bord pour injecter de la lumière dans la vitre (22) dans une direction sensiblement parallèle à la première et à la seconde surface principale, et
dans lequel le motif d'illumination est prévu sur une de la première et de la seconde surface principale pour diffuser la lumière injectée à travers une de la première et de la seconde surface principale.

5. Ensemble toit selon la revendication 1, dans lequel l'ensemble toit est un ensemble toit ouvert, le panneau transparent (2) étant agencé de manière mobile en tant qu'organe de fermeture de l'ensemble toit ouvert pour recouvrir ou au moins dégager partiellement l'ouverture (3a) dans le toit de véhicule.

6. Procédé de fourniture d'un motif d'illumination sur un élément transparent (22), le procédé comprenant a
a) la conception du motif d'illumination, le motif d'illumination comprenant au moins un élément de motif de basse densité (36), l'élément de motif de basse densité (36) comprenant une zone de diffusion de lumière (37) et des zones transparentes (38) enfermées au sein de la zone de diffusion de lumière (37), dans lequel une superficie de la zone de diffusion de lumière (37) de l'élément de motif de basse densité (36) est plus petite qu'une somme d'une superficie des zones transparentes (38) enfermées, dans lequel un bord de l'élément de motif de basse densité (36) est formé entre la zone de diffusion de lumière (37) et une zone environnante (S), la zone environnante (S) étant adjacente à l'élément de motif de basse densité (36), et dans lequel les zones transparentes (38) enfermées ont chacune une superficie avec un diamètre représentatif de 150 microns ou moins ;
b) la conception d'un motif inversé (40), dans lequel le motif inversé (40) est complémentaire au motif d'éclairage, le motif inversé (40) comprenant des éléments de motif inversés correspondant aux zones transparentes (38) enfermées dans la zone de diffusion de lumière (37) de l'élément de motif à faible densité (36) ;
c) la fourniture du motif inversé (40) sur une surface de l'élément transparent (22) ;
d) la fourniture du motif d'illumination sur la surface transparente ;
e) le retrait du motif inversé (40) de l'élément transparent (22) de sorte qu'une zone qui a été couverte par le motif inversé à l'étape c) soit transparente.

7. Procédé selon la revendication 6, dans lequel l'élément transparent (22) est un panneau transparent (2).

8. Procédé selon la revendication 6, dans lequel l'élément transparent (22) est une feuille transparente, la feuille transparente étant configurée pour être appliquée sur un panneau transparent (2).

9. Procédé selon la revendication 6, dans lequel le motif inversé (40) est formé par une composition fusible et dans lequel l'étape e) comprend le chauffage de la composition fusible pour faire fondre la composition fusible.

10. Procédé selon la revendication 6, dans lequel l'étape d) comprend la réalisation d'une opération sur la surface de l'élément transparent (22) en utilisant le motif inversé (40) comme masque.

11. Procédé selon la revendication 10, dans lequel l'opération comprend l'application d'une composition de diffusion de lumière.

12. Procédé selon la revendication 10, dans lequel l'opération comprend la modification d'une texture de surface de l'élément transparent (22).

13. Véhicule comprenant l'ensemble toit selon l'une des revendications 1 à 5.
